# EUROPÄISCHE PATENTSCHRIFT

(11) **EP 1 474 963 B1**
(45) Veröffentlichungstag und Bekanntmachung des Hinweises auf die Patenterteilung: **15.11.2006**
(21) Anmeldenummer: 04009180.3
(22) Anmeldetag: 17.04.2004
(51) Int. Cl.: A01D 34/73, A01D 34/00

(54) **Mäh- und Mulchmesser sowie dessen Anordnung in Sichelmähern**
Mowing and mulching blade and its positioning in a lawn mower
Lame de coupe et de paillage et son montage dans une tondeuse à gazon

(30) Priorität: 28.04.2003 DE 10319032
(43) Veröffentlichungstag der Anmeldung: 10.11.2004
(73) Patentinhaber: MWS Schneidwerkzeuge GmbH & Co KG, 98574 Schmalkalden (DE)
(72) Erfinder: Tröger, Hartmut, 98574 Asbach (DE); Voigt, Hartmut, 98574 Schmalkalden (DE)

(56) Entgegenhaltungen:
- EP-A- 1 181 858
- DE-A- 19 528 832
- DE-U- 20 301 311
- US-A- 5 094 065
- US-A- 5 473 873

## Beschreibung

Die Erfindung betrifft ein Mäh- und Mulchmesser sowie dessen Anordnung in Sichelmähern für den Grasschnitt gemäß dem Oberbegriff des Anspruchs 1. Ein solches Messer ist aus DE-A-195 28 832 bekannt. Die Anordnung solcher Mäh- und Mulchmesser in sichelartig arbeitenden Rasenmähern ist derart, dass sie auf einer motorisch angetriebenen Antriebswelle des Rasenmähgerätes aufgenommen und in einer unterseitig offenen glockenförmigen Abdeckung umlaufen, um mit ihren an den vorderen Rändern der Messerflügel angebrachten Schneidenabschnitten den Graswuchs abzumähen und durch ihre Ausbildungsformen einen Verwirbelungs- und damit Mulcheffekt des abgeschnittenen Mähgutes bewirken.

Sichelartig arbeitende, motorisch angetriebene Rasenmäher mit zwei- oder mehrflügeligen Messern der vorstehend bezeichneten Art, gegebenenfalls mit gesonderten Elementen zur Erreichung eines Mulcheffektes, sind verschiedentlich bekannt.
So ist beispielsweise durch die DE 4034978 A1 ein Sichelmäher bekannt, dessen Messer an den in Umlaufrichtung rückseitigen Längskanten, zumindest im Bereich der Messerflügelenden, mit Abweiselementen versehen ist, die an dem einen Flügelende nach oben und am anderen Flügelende nach unten, über die Schneidenebene hinaus, vorstehend ausgebildet sind. Diese Abweiser können zweckmäßig durch ein Umkanten des Messerrückens hergestellt oder durch ein Aufschweißen von Materialstreifen hergerichtet sein und sollen neben weiteren, auch an den Messerflügelenden angebrachten, als Abweiser wirkenden Endscheiben dazu dienen, das abgeschnittene Mähgut beim stetigen Messerumlauf mehrfach in den Wirkungsbereich der Messerschneiden zu befördern, um es dadurch einer sich wiederholenden Zerkleinerung zu unterwerfen, bevor es innerhalb der topfartigen Abdeckung nach unten fällt und somit in den Erdboden wieder eingetragen wird.
Wie sich gezeigt hat, ist mit diesem Sichelmäher der angestrebte Mulcheffekt jedoch in nur unvollkommener Weise erreicht worden, weil die Abweiselemente den ihnen zugedachten Zweck nicht ausreichend erfüllen konnten.
Es hat auch nicht an weiteren Versuchen gefehlt, dem Problem einer vollkommeneren Zerkleinerung des abgeschnittenen Mähgutes und dessen Vermulchung durch Veränderungen der Messerformen effektvoller beizukommen. Diese Versuche haben schließlich auch zu Lösungen geführt, wie sie mit der EP 0300642 A1 und der DE 19528832 C2 in Vorschlag gebracht worden sind.
Bei diesen dort in Vorschlag gebrachten Messern für Sichelmäher, die bei ausreichenden Mähleistungen auch ein wirkungsvolles Vermulchen des geschnittenen Mähgutes bewirken sollen, wurde von der Aufgabenstellung ausgegangen, zunächst die Messerschneiden abgesetzt bzw. gestuft auszubilden und in mehreren Umlaufebenen arbeiten zu lassen und durch an den Flügel- bzw. Messerenden angebrachte, schräggestellte Leitflächen zu bewirken, dass das von den Messerschneiden abgeschnittene Mähgut angehoben wird und nach Möglichkeit, je nach Trocknungsgrad oder Halmlänge des Grases, mehrfach in den Wirkungsbereich der umlaufenden Messerschneiden gelangt. Die Folge ist, dass eine mehrfache Zerkleinerung des Mähgutes stattfindet.
Bei diesen Messerausführungen sind zunächst die Flügelenden als gegenüber der Umlaufebene des Messers schräggestellte Leitflächen ausgebildet, die ausgehend von den in Umlaufrichtung vorderen Längskanten der Messerflügel zu den hinteren Längskanten hin einen durchgehend ansteigenden Verlauf haben. Des weiteren ist der äußere Schneidenabschnitt derart profiliert, dass dieser unterhalb der Ebene des Nabenteils liegt.
Andere Gestaltungselemente bestehen darin, dass an den Flügelenden in Umlaufrichtung hinter den Schneiden Abweiselemente vorgesehen sind, die sich von den Messerflügeln nach oben und/oder unten erstrecken und senkrecht oder auch schräg zur Umlaufebene des Messers angebracht sein können. Auch durch eine unterschiedliche Bemessung der Wirkflächen dieser Abweiselemente wurde versucht, die Effekte der Verwirbelung und damit der mehrfachen Zerkleinerung des Mähgutes zu verbessern bzw. zu erhöhen.
Aus der DE 298 16 120 U1 ist eine Mähvorrichtung mit einem Mäh- und Mulchmesser mit zwei sich in Messerlängsrichtung erstreckenden Schneidenabschnitten bekannt, von denen der innere trapezförmig nach oben gewölbt ausgeführt ist. Der an diesen trapezförmig gewölbten Schneidenabschnitt anschließende, gegenüber dem an der Drehachse angeordneten Mittelabschnitt tiefer gelegte, äußere Schneidenabschnitt besteht aus zwei zur Schnittebene geneigten Flächen die an den trapezförmig gewölbten Schneidenabschnitt in der Ebene der Umlaufrichtung des äußeren Schneidenabschnitts anschließen.
Die DE 203 01 311 U1 beschreibt ein Mähmesser dessen unmittelbar an einem ebenen Nabenteil angeordnete, rechtwinklige Endabschnitte einen Z-förmigen Querschnitt aufweisen.
Obzwar mit diesen Messertypen Fortschritte erreicht werden konnten, wird der angestrebte Erfolg nicht erreicht.
Der erwartete Schnittgutauswurf oder dessen Einbringen in die abgemähte Rasenfläche lässt noch immer zu wünschen übrig.
Aus diesen Erfahrungen resultieren der Zweck und die Aufgabe der vorliegenden Erfindung.

Der Zweck besteht darin, ein kombiniertes Mäh- und Mulchmesser zur Anwendung bei gewöhnlichen Rasenmähern zu schaffen, welches wesentlich verbesserte Gebrauchseigenschaften besitzt, um beim Grasschnitt ein hochgradiger vermulchtes Mähgut zu erzeugen.

Der vorliegenden Erfindung liegt die Aufgabe zugrunde, unter der Wahrung von Vorteilen, die mit Messern der vorbezeichneten Ausführungen bei der Grasmahd erreicht werden konnten, ein neuartiges Mäh- und Mulchmesser zu entwickeln, welches bei guter Schneidleistung den Effekt einer Feinzerkleinerung des Mähgutes wesentlich zu verbessern vermag, wobei die erfindungsgemäßen Aufgabe auch darin besteht, durch die Messeranordnung innerhalb der Glocke die angestrebte Feinzerkleinerung weiter zu verbessern.

Zur Lösung dieser Aufgabe sind die Merkmale des Anspruchs 1 vorgesehen. Vorteilhafte Ausgestaltungen sind in den Unteransprüchen beschrieben.

Bei dem erfindungsgemäß ausgeführten, kombiniert arbeitenden Mäh- und Mulchmesser für Rasenmäher bilden die Schneiden der Messerflügel in bekannter Art mehrere Schnittebenen, wobei der äußere, im Bereich der Flügelenden liegende Schneidenabschnitt unterhalb der Ebene des Nabenteiles des Messers liegt und in seinem der Messerschneide in Schnittrichtung nachfolgenden Abschnitt, der etwa einem Drittel der Messerbreite entspricht, einen günstiger arbeitenden Anstellwinkel aufweist.
An diesen äußeren Schneidenabschnitt schließt sich nach dem Nabenteil hin ein Schneidenabschnitt an, der sich über die Ebene des Nabenteiles hinaus erhebt.
In einer vorteilhaften Ausführungsform kann sich an diesen ein an einer Messerfläche (13) des Nabenteiles angeordneter innerer Schneidenabschnitt (5) anschließen.
Die Flügelenden des Messers, deren in Umlaufrichtung vordere Längskanten unterhalb der Ebene des Nabenteils liegen, sind als gegenüber der Umlaufebene des Messers mehrfach, d. h. stufenartig schräggestellte Leitflächen ausgebildet, die ausgehend von deren in Umlaufrichtung vorderen zur hinteren Längskante hin einen verschiedenartig ansteigenden Verlauf haben und die zudem nach dem Nabenteil hin in unterschiedlicher Länge, von vorne nach hinten kürzer werdend, eingeprägt bzw. ausgeführt sind.
Durch diese Maßnahme ist zwischen den am Messerflügel mehr am äußeren Endabschnitt liegenden stufenartig ausgebildeten Leitflächen und dem benachbarten, bogenförmigen Schneidenabschnitt eine gesonderte Leitfläche ausgebildet, die sich schräg von außen nach innen ansteigend verlaufend über die gesamte Messerflügelbreite erstreckt und an ihrer Oberfläche ungebrochen und glatt durchgehend gestaltet ist.
Diese Leiffläche bringt sowohl hinsichtlich des Grasschnittes als auch bezüglich einer angestrebten besseren Durchmischung des Schnittgutes zur Erreichung vollkommener Vermulchung in Verbindung mit den stufenartigen Leitflächen am Messerflügel wesentlich günstigere Effekte mit sich, als das mit den bekannten Messerausführungen allgemein der Fall ist.
Mit dieser neuartig gestalteten Ausführung eines Mäh- und Mulchmessers, zusammen mit dessen Anordnung in dem unterseitig offenen glockenartigen Gehäuse, unter der besonderen Gestaltung des zwischen Messerflugkreis und innerer Gehäusewandung gebildeten Ringspaltes sowie des zwischen der Schnittebene des Messers und dem unteren Gehäuserand gebildeten Freispaltes werden gänzlich und überraschend vorteilhafte Schneid- und Vermulchungseffekte des Mähgutes erreicht, weil mit diesen Wirkelementen eine totale Durchwirbelung des Mähgutes erzielt wird, wie es bisher unter Anwendung der gebräuchlichen Mittel nicht beobachtet werden konnte.
Je nach der Art, Größe und Trocknungsgrad des Graswuchses kann es zweckdienlich sein, dem Mäh- und Mulchmesser jeweils noch eine Turboscheibe, auf der Antriebswelle hinter dem Messer angeordnet, zuzuordnen, die die Aufgabe hätte, das geschnittene und bereits gemulchte Schnittgut ein weiteres Mal in den Arbeitsbereich der Messerschneiden zu verbringen.
Weitere Merkmale, Einzelheiten und Vorteile der Erfindung ergeben sich darüber hinaus neben dem Wortlaut der Ansprüche, auch in Verbindung mit den zugehörigen Zeichnungen, aus den nachfolgenden Erläuterungen zum Ausführungsbeispiel.

Die erfindungsgemäße Lösung wird dabei nachfolgend in Verbindung mit fünf zeichnerischen Darstellungen näher erläutert.

Dabei zeigt:
- Fig. 1: ein Mäh- und Mulchmesser in der Form eines der Messerflügel in schaubildlicher Darstellung;
- Fig. 2: die Vorderansicht des Messers nach Fig. 1 in der Schnittebene;
- Fig. 3: den Querschnitt durch das Messer nach Linie I - I aus Richtung x in Fig. 2;
- **Fig. 4**: den Querschnitt durch das Messer nach Linie II - II aus Richtung x in Fig. 2;
- Fig. 5: eine stilisierte Vorderansicht eines Rasenmähers mit Antriebswelle und glockenförmiger Abdeckung, jedoch ohne Fahrwerk und mit im Innern der Abdeckung angeordnetem Mäh- und Mulchmesser und mit angedeutet dargestellter, oberhalb des Messers angeordneter Turboscheibe.

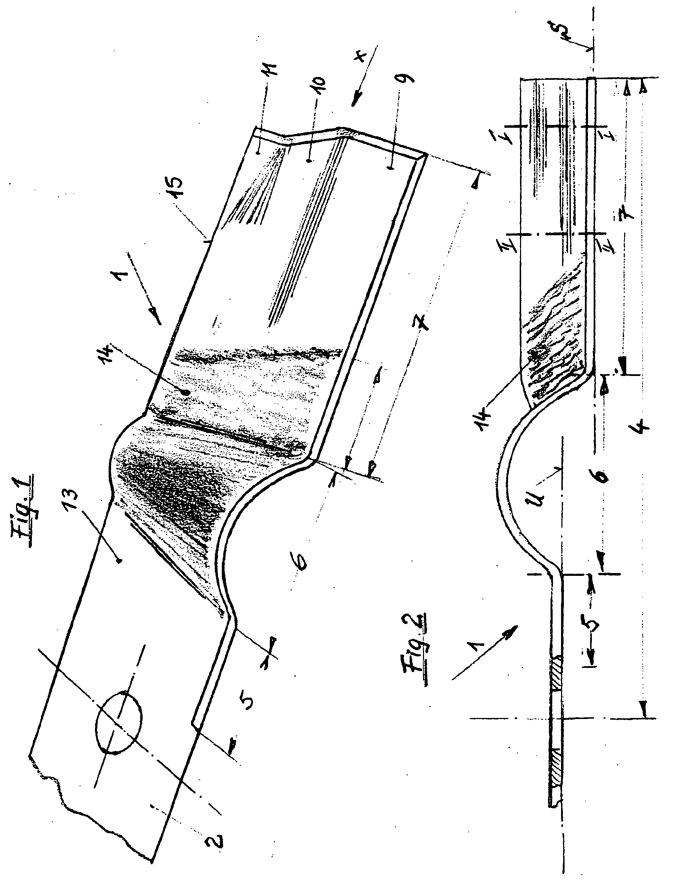

Die zeichnerischen Darstellungen in den Fig. 1 bis Fig. 5 sind, wie ersichtlich, schematisiert, die keine maßstäblichen Verhältnisse an den konstruktiven Einzelheiten und Elementen dieses Mäh- und Mulchmessers sowie dessen Anwendung in einem Maschinengehäuse für einen Rasenmäher wiedergeben.

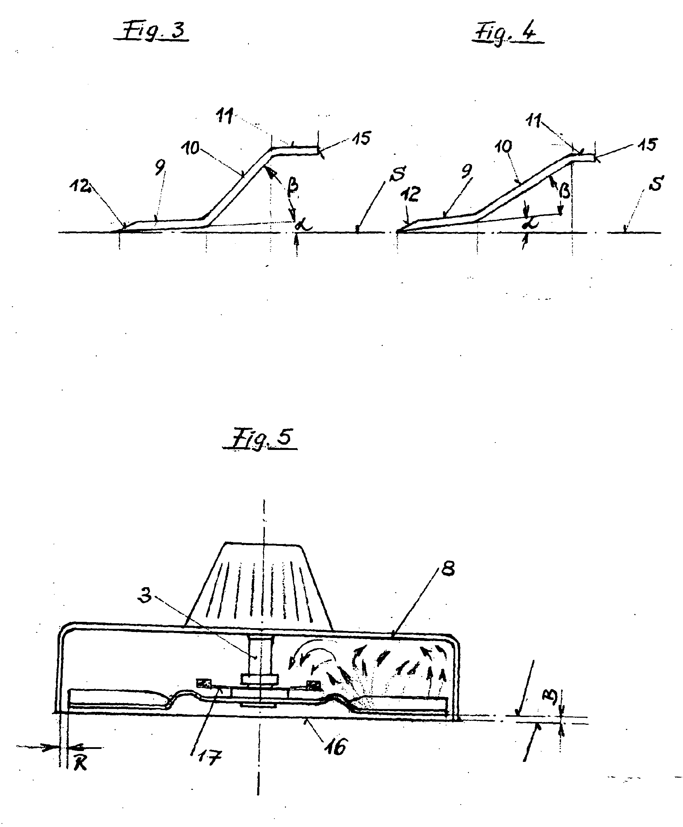

Das Mäh- und Mulchmesser 1 besteht aus einem zentralen Nabenteil 2, mit dem das Messer auf der Antriebswelle 3 (Fig. 5) aufgenommen ist sowie aus zwei oder mehreren an das Nabenteil 2 sich beidseitig anschließenden Messerflügeln 4.
An deren vorderen Längskanten sind jeweils mehrere Schneidenabschnitte angebracht, wovon der an einer Messerfläche 13 am Nabenteil angeordnete innere Schneidenabschnitt 5 in der Umlaufebene "U" des Nabenteiles 2 angeordnet ist.
Der nach außen folgende mittlere Schneidenabschnitt 6 ist bogenförmig, nach oben gewölbt ausgeprägt und die Wölbung ist nach dem Messerrücken hin nach ihrer Höhe und Breite konvergierend verlaufend ausgeführt, wobei der sich an den Schneidenabschnitt 6 nach außen hin anschließende äußere Schneidenabschnitt 7 geradlinig ausgebildet unterhalb der Umlaufebene "U" liegt.
Der Schneidenabschnitt 7 ist linear und gerade verlaufend ausgebildet und liegt mit seiner Schneiden- bzw. Schnittebene wesentlich unterhalb der Umlaufebene "U" auf der Schnittebene "S".
Die Anordnung des Messers 1 ist dabei so getroffen, dass die Schnittebene "S" im unmittelbaren Bereich der durch den unteren Rand 16 des glockenförmig ausgebildeten Gehäuses 8 liegt und dabei einen Freispalt "B" etwa in der Größe von 5 bis 10 mm bildet (Fig. 5).
Der äußere Schneidenabschnitt 7 ist in Umlaufrichtung des Messers 1 betrachtet in drei zur Schnittebene "S" geneigte Leitflächen 9, 10 und 11 gegliedert, wie das in Fig. 1 sowie den Fig. 3 und Fig. 4 gezeigt ist.
Die erstere, die Messerschneide 12 tragende Leitfläche 9 ist mit einen relativ flachen Neigungswinkel (Freiwinkel) α von etwa 5° ausgeführt und nimmt etwa 1/3 der Messerbreite ein.
Die zweite sich an die die Messerschneide 12 tragende Leitfläche 9 anschließende Leiffläche 10 ist mit einem vergrößerten Neigungswinkel β ausgebildet, der zwischen 30° und 40° beträgt. Diese zweite Leitfläche 10 ist etwa über die Hälfte der Länge des äußeren Schneidenabschnittes 7 hin ausgeprägt und läuft, wie auch die erstere Leitfläche 9 in einer nach dem mittleren Schneidenabschnitt 6 hin gelegenen stufenlosen Leitfläche 14 aus.
Die dritte, unmittelbar am Rücken **15** des Messerflügels **4** angeordnete Leitfläche **11** ist nahezu parallel zur Schnittebene "S" verlaufend ausgeführt.

Sie besitzt jedoch nur eine nach dem Nabenteil 2 des Messers 1 hin gerichtete Längserstreckung von etwa einem Drittel der Länge des äußeren Schneidenabschnittes 7.
Schließlich ist zwischen den beschriebenen drei Leitflächen 9; 10; 11 und dem mittleren Schneidenabschnitt 6 die bereits erwähnte, von der Schneide 12 des Messers 1 zum Messerrücken 15 durchgehende, an der Oberfläche des Messerflügels 4 ungebrochene, schräg zur Umlaufrichtung des Messerflügels 4 verlaufende und glatt ausgeführte Leitfläche 14 ausgebildet, mit deren Hilfe zudem ein gänzlich neuartiger Arbeitseffekt erreicht wird.
Die hier getroffene geometrische Anordnung von Leitflächen als auch die in Vorschlag gebrachten Ausführungsformen derselben tragen im erheblichen Maße zur Verbesserung des Leistungsverhaltens und des Vermulchungsgrades dieser Rasenmäher bei, wobei der Leitfläche 14 die bereits erwähnte besondere Bedeutung zufällt.
Eine besonders wirkungsvolle Zerkleinerung des geschnittenen Mähgutes wird noch dadurch erreicht, dass gemäß der weiteren Ausgestaltung der erfinderischen Lösung das Messer unter Ausbildung eines Ringspaltes "R" im Gehäuse 8 angeordnet ist, wodurch der Einwirkungsbereich funktionell bemessener und die Einwirkungsdauer auf das Mähgut wirksamer bestimmt und der Mäh- und Vermulchungsprozess fördernd beeinflusst wird.

### Bezugszeichenzusammenstellung

- 1: Mäh- und Mulchmesser
- 2: Nabenteil
- 3: Antriebswelle
- 4: Messerflügel
- 5: innerer Schneidenabschnitt
- 6: bogenförmig gewölbter Schneidenabschnitt
- 7: äußerer Schneidenabschnitt
- 8: Gehäuse
- 9: Leitfläche
- 10: Leitfläche
- 11: Leitfläche
- 12: Messerschneide
- 13: Messerfläche
- 14: Leitfläche
- 15: Rücken des Messerflügels
- 16: Rand des Gehäuses
- 17: Turboscheibe

- α: Neigungswinkel (Freiwinkel)
- β: Neigungswinkel der zweiten Leitfläche
- U: Umlaufebene des Nabenteiles (2)
- S: Schnittebene des äußeren Schneidenabschnittes (7)
- B: Freispalt zwischen der Schnittebene (S) und dem unterem Rand des Gehäuses (8)
- R: Ringspalt zwischen Messerflügel und innerer Gehäusewandung

## Patentansprüche

1. Mäh- und Mulchmesser sowie dessen Anordnung in Sichelmähern für den Grasschnitt, mit zwei oder mehreren von einem der Aufnahme auf einer Antriebswelle dienenden Nabenteil sich seitlich erstreckenden Messerflügeln, die im Bereich ihrer vorderen Längskanten mit Schneiden ausgestattet und in Längs- und Querrichtung verschiedenartig profiliert sind, wobei die Messerflügel (4) des Mäh- und Mulchmessers (1) aus mindestens zwei Schneidenabschnitten (6, 7) gebildet sind, von denen ein sich an das Nabenteil (2) anschließender Schneidenabschnitt (6) nach oben gewölbt ausgeführt ist, und sich der äußere, vom Nabenteil (2) radial entfernt gelegene, sich an den nach oben gewölbten Schneidenabschnitt (6) anschließende Schneidenabschnitt (7) linear und gerade verlaufend ausgebildet ist, wobei der eine Schneiden- bzw. Schnittebene (S) bildende äußere Schneidenabschnitt (7) im unmittelbaren inneren Bereich einer durch einen unteren Rand (16) eines glockenförmigen Gehäuses (8) gebildeten Ebene angeordnet ist, **gekennzeichnet durch** folgende Merkmale:
- der äußere Schneidenabschnitt (7) ist in drei zur Schnittebene (S) geneigte Leitflächen (9; 10; 11) gegliedert, wobei
• die erstere, die Messerschneide (12) aufweisende Leitfläche (9) mit einem relativ flachen Neigungswinkel (α) von ca. 5° ausgeführt ist und etwa 1/3 der Messerbreite besitzt;
• die zweite, sich an der die Schneide tragenden Leitfläche (9) anschließende Leitfläche (10) mit einem vergrößerten Neigungswinkel (β) in der Größe von ca. 30° bis 40° ausgeführt ist und etwa über die Hälfte des äußeren Schneidenabschnittes (7) hin ausgeprägt ist;
• die dritte, nach einem Rücken (15) des Messerflügels (4) hin gelegene Leitfläche (11) nahezu parallel zur Schnittebene (S) verlaufend ausgeführt, jedoch nur etwa bis zu einem Drittel der radialen Längserstreckung des äußeren Schneidenabschnittes (7) ausgeprägt ist; wobei
• zwischen den genannten drei Leitflächen (9; 10; 11) und dem bogenförmig gewölbten Schneidenabschnitt (6) eine von der Schneide (12) des Messers zu dem Messerrücken (15) hin durchgehend ungebrochene, schräg zur Umlaufrichtung des Messerflügels (4) verlaufende, an der Oberfläche des Messerflügels stufenlos glatte Leitfläche (14) ausgebildet ist.

2. Mäh- und Mulchmesser sowie dessen Anordnung in Sichelmähern für den Grasschnitt nach Anspruch 1, **dadurch gekennzeichnet, dass** das Mäh- und Mulchmesser in dem als Schnittkessel dienenden, glockenartig gestalteten, unterseitig offenen Gehäuse (8), durch das der Umlaufkreis und die Umlauf- bzw. Schnittebene des Messers unter Ausbildung eines Freispaltes nach außen hin gesichert ist, aufgenommen wird, wobei der im Gehäuse (8) gebildete Innenraum etwa auf eine Höhe von 120 mm ± 20 mm bemessen ist, das Messer (1) unmittelbar am unteren Gehäuserand unter Bildung eines der Arbeitssicherheit angemessenen Freispaltes (B) etwa in der Größe von 5 - 10 mm angeordnet und zwischen dem äußeren Ende der Messerflügel (4) und der inneren Gehäusewandung ein frei bleibender Ringspalt (R) in der Größe von ca. 5 mm ± 2 mm ausgebildet ist.

3. Mäh- und Mulchmesser sowie dessen Anordnung in Sichelmähern für den Grasschnitt nach Anspruch 1 oder 2, **dadurch gekennzeichnet, dass** eine dem gewölbt ausgeführten Bereich des Mäh- und Mulchmesser (1) benachbarte, am Nabenteil (2) angeordnete Messerfläche (13) ebenfalls mit einer Schneide, dem inneren Schneidenabschnitt (5), versehen ist.

4. Mäh- und Mulchmesser sowie dessen Anordnung in Sichelmähern für den Grasschnitt nach Anspruch 1, bzw. Anspruch 2, oder Anspruch 3, **dadurch gekennzeichnet, dass** dem Mäh- und Mulchmesser (1) eine oder mehrere auf der gemeinsamen Antriebswelle hinter dem Messer aufgenommene Turboscheibe/n (17) zugeordnet ist/sind.

## Claims

1. Mowing and mulching blade and its positioning in rotary lawnmowers for grass cutting, with two or more blade wings extending laterally from a hub section serving as attachment to a drive shaft, which in the area of the forward longitudinal edge are equipped with blades, and in the lengthwise and transverse direction are provided with different profiles, in which the blade wings (4) of the mowing and mulching blade (1) consist of at least two arched cutting sections (6, 7), of which one arched cutting section (6) adjoining the hub section (2) is arched upwards, and the outer arched cutting section (6) radially separated from the hub section (2) runs directly and linearly in relation to the outer cutting section (7) adjoining the upward arched cutting section (6), and in which the outer cutting section (7) forming one cutting plane (S) is positioned in the immediate inner area of a plane formed by the lower housing edge (16) of a bell-shaped housing (8), **characterised by** the following features:
- the outer cutting section (7) is divided into three guide surfaces (9, 10, 11) inclined in relation to the cutting plane (S), whereby
• the first guide surface (9) accommodating the blade (12) is set at a relatively acute angle (α) of approx. 5° extending along approximately 1/3 of the blade width;
• the second guide surface (10) connected to the guide surface (9) carrying the blade is set at an increased inclination angle (β) of approx. 30° to 40°, and extends over approximately half of the outer cutting section (7);
• the third guide surface (11) located behind the back of the blade wing (15) of the blade wing (4) almost parallel to the cutting plane (S), takes up only approximately up to one third of the radial longitudinal extension of the outer cutting section (7), whereby
• a smooth guide surface (14) is formed between the above three guide surfaces (9, 10, 11) and the arched cutting section (6) by the uninterrupted surface of the blade wing extending from the blade (12) to the back of the blade wing (15) extending at an angle to the direction of rotation of the blade wing (4) at the surface of the blade wing.

2. Mowing and mulching blade and its positioning in rotary lawnmowers for grass cutting, in accordance with Claim 1, **characterised by** the fact that the mowing and mulching blade is held in the housing (8), which is open to the underside, and serves as the bell-shaped cutting chamber, by which the rotating circle and the rotation of cutting plane of the blade is ensured by the formation of an open gap toward the outside, in which the interior space formed within the housing (8) is set to a height of 120 mm ± 20 mm, the blade (1) is arranged directly at the lower housing edge while forming a gap (B) appropriate for safe use of approximately 5 - 10 mm, and an annular gap (R) between the outer end of the blade wing (4) and the inner housing wall of a size of approx. 5 mm ± 2 mm.

3. Mowing and mulching blade and its positioning in rotary lawnmowers for grass cutting, in accordance with Claims 1 or 2, **characterised by** the fact that a blade surface (13), also arranged on the hub section (2) adjoining the arched area of the mowing and mulching blade (1), is also equipped with a blade, the inner cutting section (5).

4. Mowing and mulching blade and its positioning in rotary lawnmowers for grass cutting, in accordance with Claims 1, 2 or 3, **characterised by** the fact that the mowing and mulching blade (1) is fitted with one or more turbo discs (17) positioned on the common drive shaft behind the blade.

## Revendications

1. Couteau de coupe et de paillage ainsi que sa disposition dans des faucheuses pour la coupe de l'herbe, avec deux ou plusieurs ailettes de lame s'étendant latéralement depuis l'un des dispositifs de réception sur un arbre d'entraînement servant de moyeu, équipé de tranchant sur la partie de ces rebords avant longitudinaux et qui sont profilés dans différents sens, longitudinaux et transversaux, bien que les ailettes de lame (4) de la lame de coupe et de paillage (1) soient formées au moins par deux parties de coupe (6,7) dont une partie de lame (6) à la suite est réalisée de manière bombée vers le haut à la partie du moyeu (2) et que la partie extérieure, radialement la plus éloignée de la partie du moyeu est formée, en continuant de manière droite et linéaire, par la partie de coupe (7) à la suite de la partie de coupe bombée (6) bien que le niveau de coupe ou de découpe (S) formé par la partie de coupe extérieure (7) soit disposé dans la zone intérieure immédiate d'un niveau formé par un rebord inférieur (16) d'un carter en forme de cloche (8), **caractérisé par** les particularités suivantes :
- la partie extérieure de coupe (7) est répartie en trois niveaux de coupe (S) à surfaces d'orientation inclinées (9 ;10 ;11) bien que
- la toute première des surfaces d'orientation (9) est réalisée en présentant un tranchant de lame (12) avec un angle d'inclinaison relativement plat (α) d'environ 5° et possède environ 1/3 la largeur de la lame ;
- la seconde surface d'orientation (10) suivant le tranchant porté par la surface d'orientation (9) est réalisée avec un angle d'inclinaison (β) agrandi de l'ordre de 30° à 40° et s'étend sur environ la moitié de la partie extérieure de la lame (7) ;
- la troisième surface d'orientation (11) est réalisée comme dos (15) de l'aille de la lame (4) de manière pratiquement parallèle au niveau de coupe (S), néanmoins disposée sur seulement un tiers de la distance radiale longitudinale de la parties extérieure de la lame (7) ; bien que
- entre les trois surfaces d'orientation citées (9 ; 10 ; 11) et la partie du tranchant bombé en forme d'arc (6), une surface d'orientation plane (14) continue est constituée par le tranchant (12) de la lame sans interruption jusqu'au dos de la lame (15), de manière inclinée par rapport au sens de rotation des ailettes de lame (4) passant à la surface des ailettes de lame.

2. Couteau de coupe et de paillage ainsi que sa disposition dans des faucheuses pour la coupe de l'herbe, selon la revendication 1, en cela **caractérisé par le fait que** le couteau de coupe et de paillage est protégé dans le carter ouvert par le dessous (8) servant de cuve de coupe, en forme de cloche, dans lequel le périmètre de rotation et le niveau du périmètre et de la coupe de la lame est logé avec la constitution d'un espace libre vers l'extérieur, bien que l'espace intérieur formé dans le carter (8) est dimensionné à une hauteur de 120 mm ± 20 mm, le couteau (1) est disposé juste au rebord inférieur du carter en considération de la constitution d'un espace libre (B) de sécurité de travail de la taille d'environ 5 - 10mm et un écart circulaire (R) restant libre, de la taille d'environ 5 mm ± 2 mm est formé entre le bout extérieur des ailettes de lame (4) et la paroi intérieure du carter.

3. Couteau de coupe et de paillage ainsi que sa disposition dans des faucheuses pour la coupe de l'herbe, selon les revendications 1 et 2, en cela **caractérisé par le fait qu'**une surface de couteau disposée à la partie du moyeu (2) voisine de la zone réalisée de manière bombée du couteau de coupe et de paillage (1), est également doté d'une partie de coupe intérieur (5) avec une lame.

4. Couteau de coupe et de paillage ainsi que sa disposition dans des faucheuses pour la coupe de l'herbe, selon les revendications 1 ou la revendication 2 ou la revendication 3 en cela **caractérisé par le fait qu'**un ou plusieurs turbo disques (17) sont disposés derrière la lame du couteau de coupe et de paillage (1) sur l'arbre d'entraînement commun.
